# EUROPEAN PATENT SPECIFICATION

(11) **EP 3 857 095 B1**
(45) Date of publication and mention of the grant of the patent: **07.09.2022**
(21) Application number: 19794646.0
(22) Date of filing: 27.09.2019
(51) Int. Cl.: F16H 9/06, F16H 9/14, F16H 55/54, B62M 23/00, F16H 55/56

(54) **SPEED-CHANGING DEVICE FOR TWO-WHEELED VEHICLE**
GANGWECHSELVORRICHTUNG FÜR EIN ZWEIRADFAHRZEUG
DISPOSITIF DE CHANGEMENT DE VITESSE POUR VÉHICULE À DEUX ROUES

(30) Priority: 28.09.2018 IT 201800009021
(43) Date of publication of application: 04.08.2021
(73) Proprietor: Cucchi Giovanni & C. S.r.l., 20041 Bussero (IT)
(72) Inventor: CUCCHI, Cesare, 20060 Bussero (IT)
(74) Representative: Candito, Rocco
(86) International application number: PCT/IB2019/058222
(87) International publication number: WO 2020/065603

(56) References cited:
- DE-A1- 4 305 343
- GB-A- 2 337 732
- US-A1- 2010 130 318
- US-A1- 2017 261 078

## Description

### BACKGROUND OF THE INVENTION

The present invention relates to a speed-changing device for a two-wheeled vehicle, in particular for a cycle or even a motorcycle.

### STATE OF THE ART

It is known to use speed gears on bicycles such as racing or urban bikes or mountain bikes.

The aforementioned speed gears comprises a group of toothed wheels of different diameters, mutually coaxially stacked, and mounted on the hub of the rear wheel, on which a transmission chain engages.

A derailleur organ is provided which, operated by means of a special lever by the user, moves, at the rear region, the transmission chain from one wheel to the other of the aforesaid group of toothed wheels.

A drawback of these speed gears is that during a change of position of the chain from one toothed wheel to another, the same chain, due to the variation of position along the axis of rotation of the hub, is subjected to an action of bending that is fatiguing and in the long run can damage it. Furthermore, this limit requires avoiding as much as possible to operate the speed gear in conditions of use "under stress", that is when the cyclist is applying a considerable traction force on the bicycle pedals, for example during an acceleration phase or while he travels along a uphill road. Moreover, these speed changes are affected by a non-negligible noise level.

Other types of speed gear for bicycles are also known, which however are particularly complex from the structural and functional point of view, due for example to the high number of components from which they are composed (epicycloid mechanisms with numerous satellites, planetary elements, etc..).

In view of the drawbacks above illustrated, it would therefore be desirable to have a speed-changing device which is structurally and functionally simplified, light and silent in operation, highly reliable and effective in any condition of use, even under stress. Document GB 2 337 732 A shows the preamble of claim 1.

### OBJECTS OF THE INVENTION

An object of the invention is to provide a speed-changing device for a bicycle or even a motorcycle which is simple and economical to make, structurally simplified and capable of operating effectively in any operating condition without fatiguing the chain or belt transmission element.

### BRIEF DESCRIPTION OF THE INVENTION

These and further objects and advantages can be achieved by means of a speed varying device as defined in claim 1.

Owing to the speed-changing device according to the invention all the drawbacks of the state of art are overcome.

### BRIEF DESCRIPTION OF THE DRAWINGS

The characteristics and advantages of the speed-changing device according to the invention will become more apparent from the following description, with reference to the drawings, in which:

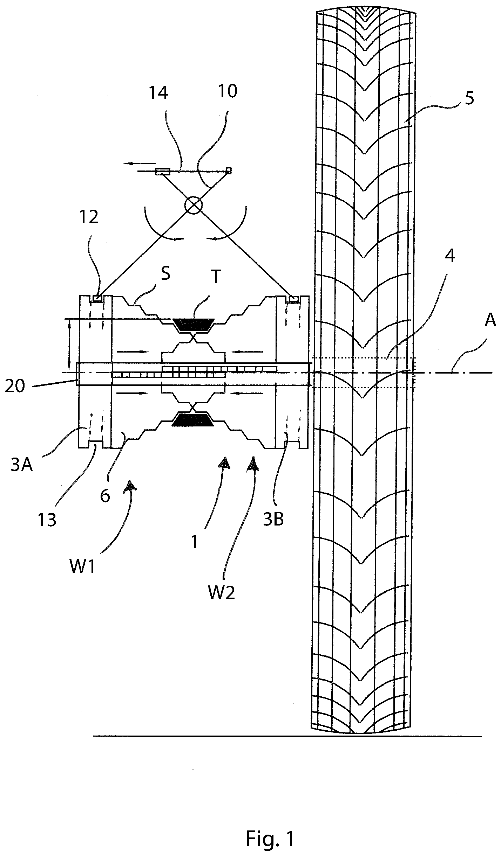

Figure 1 shows the speed-changing device according to the invention connected to the rear wheel of a two-wheeled vehicle, in particular a bicycle;

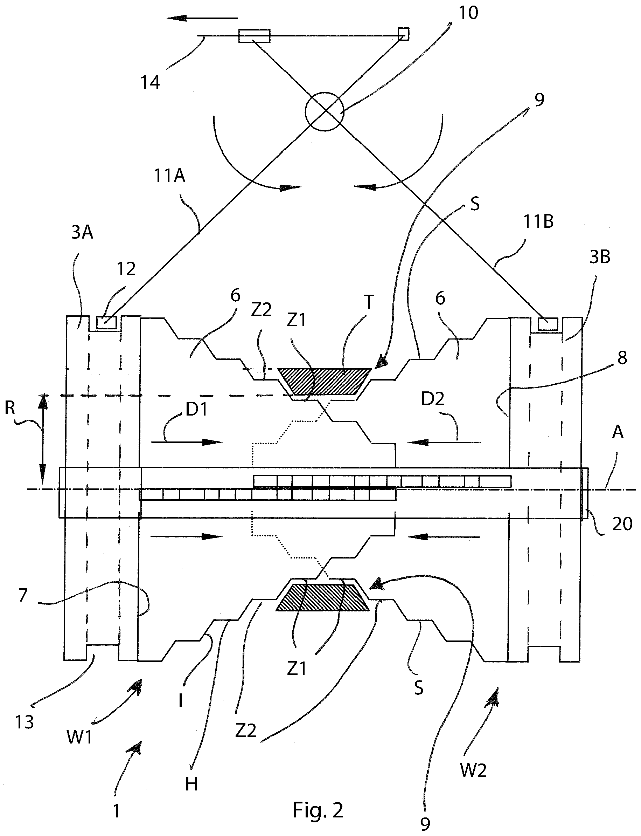

Figure 2 is an enlarged view of the speed-changing device according to the invention;

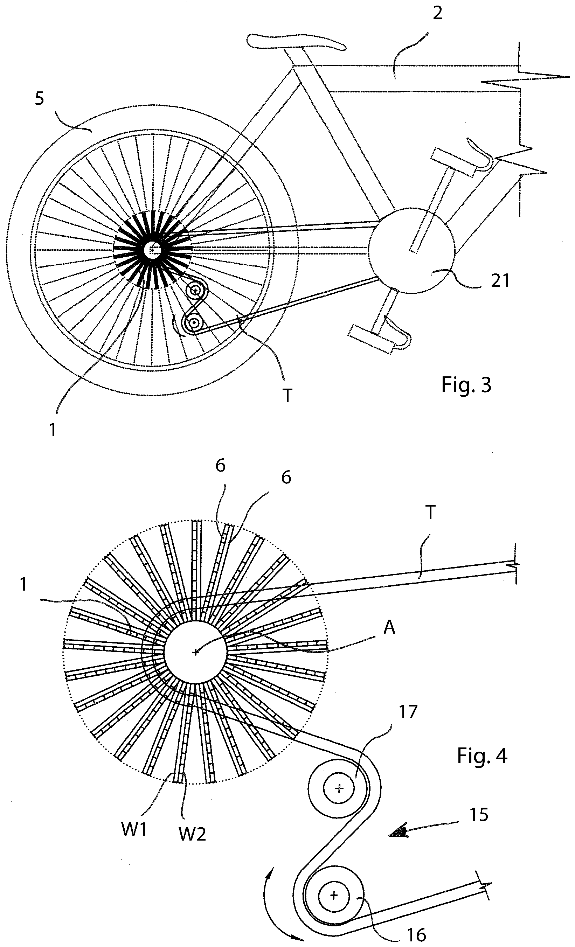

Figure 3 shows a part of a bicycle on which the speed-changing device according to the invention is mounted;
Figure 4 is an enlarged detail of Figure 3;

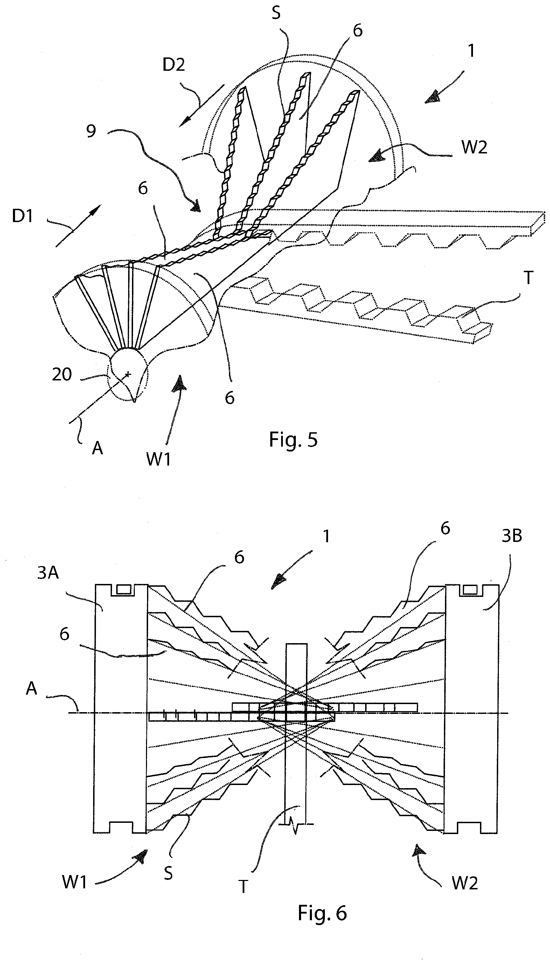

Figure 5 is an interrupted and perspective schematic view of the speed-changing device coupled to a chain or belt transmission element;
Figure 6 is another schematic view of the speed-changing device according to the invention;
Figures 7 to 9 show the speed-changing device object of the invention in different operative configurations corresponding to different kinematic transmission ratios;
Figures 10 and 11 show the speed-changing device in two different operating configurations corresponding respectively to a minimum radius and to a maximum radius of winding of the transmission element, corresponding to two extreme transmission ratios.

### DETAILED DESCRIPTION OF THE INVENTION

With reference to the attached figures, a speed-changing device 1 is described for a two-wheeled vehicle 2, in particular, but not in a limiting way, for a bicycle, or even for a motorcycle.

The speed-changing device 1 comprises circular support means 3A, 3B, able to be mounted, by means of a connection body 20, on a hub 4 of a rear wheel 5 of the bicycle 2 or motorcycle, and supporting a plurality of meshing lamellar elements 6 suitable for engaging with a transmission element T.

The transmission element T is of the flexible type, for example of the chain type or of the belt type, in particular toothed belt.

The circular support means 3A, 3B precisely comprise a pair of distinct support elements 3A, 3B, each of a disc-shaped shape, and rotating about a same rotational axis A.

The lamellar meshing elements 6 are arranged radially around the aforementioned rotation axis A.

In particular, as better detailed below, each lamellar element 6 is provided with a shaped meshing edge S which comprises a succession of zones Z1, Z2, .., Zn placed at different distances from the aforementioned rotation axis A.

The number of zones Z1, Z2, .., Zn can be chosen in a desired manner according to the specific needs and intended use of the speed-changing device 1. For example, for each meshing shaped edge S a number of the aforesaid Z zones can be provided varying from about 12 to about 15, corresponding to as many transmission ratios, and therefore dynamic transmission torques.

The two disc-shaped support elements 3A, 3B, which are mutually parallel and coaxial, can be translated (by means of a distance-adjusting member 10 described later) along the aforesaid rotation axis A to move closer/away from each other so as to vary a ratio, therefore dynamic torque, kinematic transmission for the bicycle 2.

The lamellar meshing elements 6 are grouped in a first series W1 of lamellar meshing elements 6 and a second series W2 of mutually opposite lamellar meshing elements 6 movable to and from one another to change a meshing radius R with the transmission element T with a chain or toothed belt and therefore vary a corresponding kinematic transmission ratio (i.e. a speed ratio for the bicycle 2).

As already specified, the number of zones Z1, Z2, .., Zn is chosen in such a way as to obtain a desired discrete number of winding radius R, thus corresponding kinematic transmission ratios. The greater the number of the aforementioned zones, i.e. the steps of the shaped profiles S, the greater the number of speed ratios obtainable and therefore the finer the adjustment of the transmission ratio will be.

Also the number of laminar meshing elements 6 can be chosen appropriately according to the specific requirements and intended use of the speed-changing device 1.

For example, a number of lamellar elements 6 ranging from about 8 to about 15 can be provided.

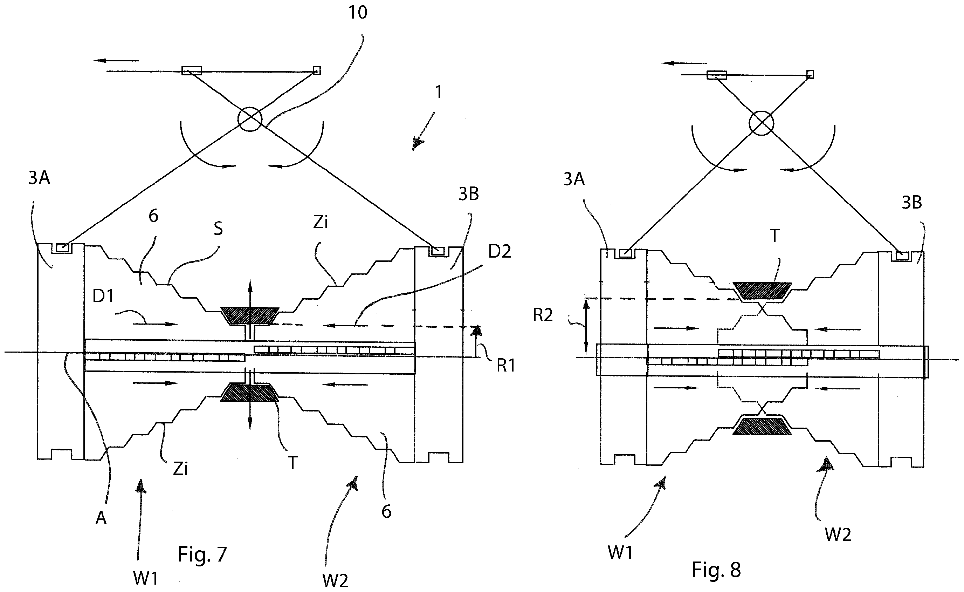

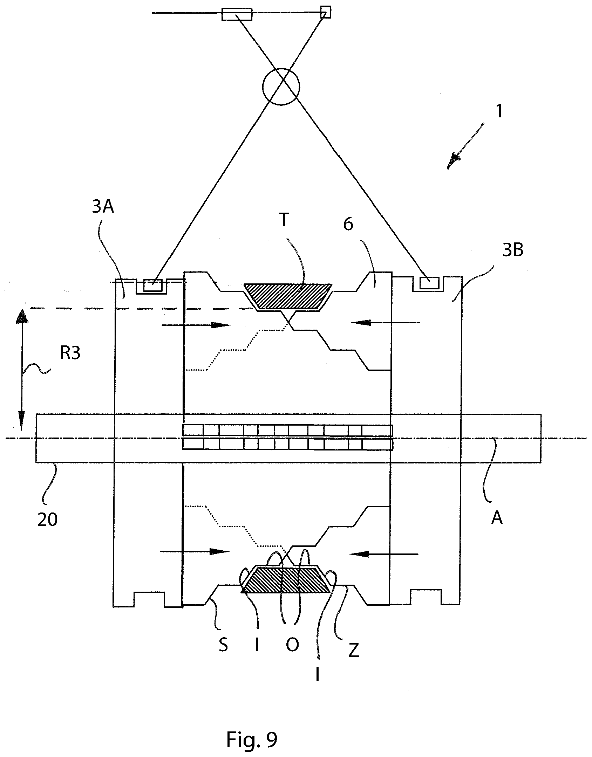

From a comparison of figures 7, 8, 9, it is possible to see three different radii from the increasing meshing radius R1, R2, R3, corresponding to different kinematic transmission ratios.

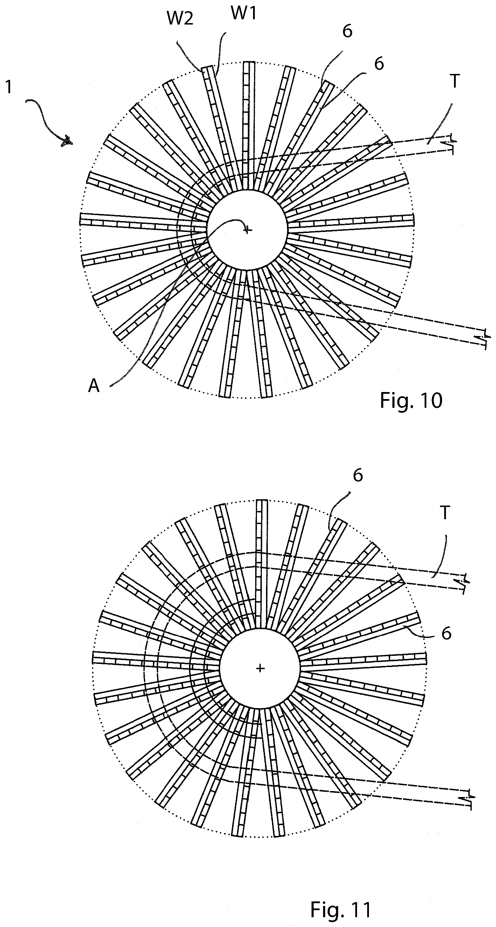

Figures 10 and 11 show the speed-changing device in two different operating configurations corresponding respectively to the minimum meshing radius R1 and to a maximum meshing radius of the transmission element T, thus corresponding to two extreme values of transmission ratios.

More precisely, the lamellar meshing elements 6 of the first series W1 are supported by a first disc-shaped support element 3A of the aforesaid pair, and the lamellar meshing elements 6 of the second series W2 are supported by a second disc-shaped support element 3B of the aforesaid couple.

The first disc-shaped support element 3A and the second disc-shaped support element 3B are then mounted on the connection body 20 on which they can axially slide along the rotation axis A.

Two groups are therefore defined - one opposed to the other - of lamellar meshing elements 6. The two groups, or series W1, W2, of lamellar elements are therefore opposite to one other so as to define, in correspondence with a median or central area of the connecting body 20, an annular band, or arc portion, on which the transmission element T can wind with a desirable meshing radius from time to time. Owing to this configuration, the transmission element T can always operate in a same plane, without the need to have to translate on planes that change from time to time with respect to the plane containing the driving crown 21 moved by the cyclist's feet. Owing to the speed-changing 1 according to the invention, therefore, the undesired effect of subjecting the chain or belt T to bending actions with respect to the plane on which the same chain or belt advances is thus avoided. In this way, the belt or chain element T can operate in a less tired and less noisy manner.

The lamellar elements 6 of the first series W1 protrude from an inner face 7 of the first disc-shaped support element 3A, and the lamellar elements 6 of the second series W1 protrude from a further inner face 8 of the disk-shaped second support element 3B, wherein the aforesaid further inner face 8 faces the inner face 7 of the first disc-shaped support element 3A.

Each lamellar element 6 of the first series W1 is approached to, and relatively slidably on a corresponding lamellar element 6 of the second series W2 in such a way that the respective mutually opposite shaped edges S define together, from time to time, a respective meshing tooth seat 9 for the transmission element T.

The first series W1 and the second series W2 of lamellar elements 6 are sliding parallel to the axis A of rotation and are movable in directions D1, D2 mutually opposite to approach to, or move away from, one another.

The shaped meshing edge S of each lamellar element 6 has a stepped profile which extends from the respective disc-shaped support element 3A, 3B in a downward manner towards the axis A of rotation.

The shaped meshing edges S are configured to define a plurality of discrete transmission ratios.

The above-mentioned zones Z1, Z2, .. Zn of each shaped edge S are positioned one after the other at a distance from the axis A of rotation which progressively decreases from a maximum distance value, in the vicinity of the disc-shaped support elements 3A, 3B, at a minimum distance value in the region farthest from respective support elements 3A, 3B.

The mutual approach or removal of the support elements 3A, 3B determines correspondingly a greater interpenetration or an expansion of the two series W1 and W2 of lamellar elements 6 and consequently there is an increase or a decrease in the meshing radius of the transmission element T, which therefore translates into the desired variation of the kinematic transmission ratio.

More precisely, the step profile of each shaped meshing edge S comprises horizontal portions H parallel to the rotation axis A, arranged to receive the chain transmission element T in support, and inclined portions I to define converging surfaces for receiving the transmission element T. The inclined portions I of two opposite lamellar elements 6 are shaped to guide and facilitate a radial movement of the transmission element T, and cooperate together so that, with a reciprocal approach movement, they progressively impose the transmission element T a centrifugal movement to move away from the axis A of rotation.

The aforementioned distance-adjusting organ 10 is now described, which can be actuated to move closer to, away from, each other the first series W1 and the second series W2 of lamellar meshing elements 6.

The distance-adjusting member 10 comprises two lever elements 11A, 11B mutually hinged and having a pad shaped end 12. The pad shaped end 12 are shaped to slidably engage in respective grooves or gorges 13 which are formed and extend circumferentially on the disc-shaped support elements 3A, 3B.

The lever elements 11A, 11B, movable to close or mutually open like a pair of scissors, can be operated by means of a cable element 14, which can be controlled by means of a suitable lever placed on the handlebar of the bicycle 2.

In a possible version, not shown, the distance-adjusting member 10 can include a motorized electric/electronic unit capable of automatically varying - by predetermined quantities - the distance between the aforementioned disc-shaped support elements 3A, 3B to achieve the desired transmission ratios. The aforementioned motorized unit can be controlled by a suitable lever located on the handlebar and configured to send the appropriate electrical/electronic control signals. The communication between the aforesaid motor-driven unit and the control lever can be achieved by means of an electrical connection cable or by means of a wireless connection.

The speed-changing device 1 according to the invention also includes a tensioning unit 15 provided with wheels 16, 17, at least one of which is pivoted and elastically oscillating, configured to keep the transmission element T in tension as the meshing radius on the lamellar meshing elements 6 varies.

From the above description and shown in the attached figures, it is evident that the speed-changing device 1 according to the invention successfully achieves all the prefixed purposes.

In particular, the speed-changing device 1 according to the invention is remarkably simplified from the structural and functional point of view, and is also very mechanically reliable. In addition, less "fatiguing" and also quieter functioning is made possible for the transmission element T and the other components of the bicycle. Thanks to the configuration described above, the speed-changing device 1 can be operated in any condition of use and effort, and the variation of the discrete type transmission ratio can be performed at any time, even during a condition operating "under stress", i.e. while the cyclist applies a considerable traction force on the driving crown 21 and therefore on the speed-changing device 1, without this causing any risk of damage to any component. For example, the cyclist can operate the speed-changing device 1 under stress to vary a transmission ratio while traveling along a stretch of road uphill, or during an acceleration phase, without any problem for the components of the speed-changing device 1 itself.

The speed-changing device 1 is cheaper to realize due to its high structural simplicity with respect to the speed gear belonging to the state of the art.

Any element forming part of the speed-changing device 1 according to the invention can be replaced with other equivalents in structural and functional terms, and the materials, insofar as they are compatible with the specific use for which they are intended, can be suitably chosen depending on the requirements and depending on the state of art available.

## Claims

1. Speed-changing device for two-wheeled vehicle (2), comprising:
- circular support means (3A, 3B) suitable to be fitted, by a connecting body (20), to a hub (4) of a wheel (5) of said two-wheeled vehicle (2),
- a plurality of meshing lamellar elements (6) supported by said circular support means (3A, 3B) and radially arranged around a rotational axis (A) of said circular support means (3A, 3B), said meshing lamellar elements (6) being arranged for engaging a transmission element (T) of chain or belt type of said vehicle (2),
- each lamellar element (6) being provided with a shaped meshing edge (S) that comprises a sequence of zones (Z1, Z2,.., Zn) positioned at different distances from said rotational axis (A),
- said meshing lamellar elements (6) being grouped in a first series (W1) of meshing lamellar elements (6) and a second series (W2) of meshing lamellar elements (6) that are mutually opposite and movable to and from one another to change a meshing radius (R) with said transmission element (T) and thus a corresponding kinematic transmission ratio,
- a distance-adjusting member (10) actuatable to move the first series (W1) and the second series (W2) of meshing lamellar elements (6) towards and away from one another,
**CHARACTERISED IN THAT** said distance-adjusting member (10) comprises two lever elements (11A, 11B) mutually hinged and having pad shaped ends (12) for slidingly engaging respective groove means (13) that circumferally extend on said circular support means (3A, 3B), said lever elements (11A, 11B) being actuatable by a cable element (14).

2. Speed-changing device according to claim 1, wherein said circular support means comprises a pair of distinct, parallel and coaxial disk-shaped support element (3A, 3B) translatable along said rotational axis (A), on said connecting body (20), to be moved to and from one another to vary the kinematic transmission ratio.

3. Speed-changing device according to claim 2, wherein the meshing lamellar elements (6) of the first series (W1) are supported by a first disk-shaped support element (3A) of said pair, and the meshing lamellar elements (6) of the second series (W2) are supported by a second disk-shaped supporting element (3B) of said pair.

4. Speed-changing device according to claim 3, wherein the lamellar elements (6) of the first series (W1) protrude from an inner face (7) of the first disk-shaped support element (3A), and the lamellar elements (6) of the second series (W1) protrude from a further inner face (8) of the second disk-shaped support element (3B), wherein said further inner face (8) faces said inner face (7) of the first disk-shaped support element (3A).

5. Speed-changing device according to any one of the preceding claims, wherein each lamellar element (6) of the first series (W1) is side by side arranged to, and is relatively slidable on, a corresponding lamellar element (6) of the second series (W2) such that the respective opposite shaped meshing edges (S) define together, each time, a respective toothed meshing seat (9) for said transmission element (T).

6. Speed-changing device according to any one of the preceding claims, wherein said first series (W1) and said second series (W2) of lamellar elements (6) are slidable parallely to said rotational axis (A) and are movable in mutually opposite directions (D1, D2) to move towards or away from one another.

7. Speed-changing device according to any one of the preceding claims, wherein each shaped meshing edge (S) has a step profile that extends from the respective circular support means (3A, 3B) in a getting down manner to said rotations axis (A), the shaped meshing edges (S) being configured to define a plurality of discrete transmission ratios.

8. Speed-changing device according to any one of the preceding claims, wherein said zones (Z1, Z2,.. Zn) are positioned one after the other at a distance from said rotational axis (A) that progressively decreases from a maximum distance value, near the circular support means (3A, 3B), to a minimum distance value in the region furthest from said circular support means (3A, 3B).

9. Speed-changing device according to claim 7 or 8 as appended to claim 7, wherein the step profile of each shaped meshing edge (S) comprises horizontal portions (H) parallel to said rotational axis (A), arranged for restingly receiving said transmission element (T), and sloped portions for defining converging surfaces for receiving said transmission element (T), the sloped portions (I) of two opposite lamellar elements (6) being shaped for guiding and facilitating a radial movement of said transmission element (T), said sloped portions (I) cooperating together so that, at a reciprocal approach movement, they progressively impose on said transmission element (T) a centrifugal movement moving away from said rotational axis (A).

10. Speed-changing device according to claim 1, wherein said distance-adjusting member (10) comprises a motor-driven unit of electric/electronic type suitable for automatically varying - by preset amounts - the distance between said disk-shaped supporting elements (3A, 3B) to achieve the desired transmission ratios, said motor-driven unit being actuatable by a suitable lever to be positioned on a handlebar and configured for sending suitable electric/electronic control signals.

11. Speed-changing device according to claim 10, wherein the communication between said motor-driven unit and said control lever is achieved by an electric connecting cable or by a wireless connection.

12. Speed-changing device according to any one of the preceding claims, further comprising a tensioning unit (15) provided with wheels (16, 17) to maintain said transmission element (T) tensioned as the winding radius on said first (W1) and second (W2) series of lamellar elements (6) changes.

## Patentansprüche

1. Gangwechselvorrichtung für ein Zweiradfahrzeug (2), umfassend:
- kreisförmige Stützmittel (3A, 3B), die geeignet sind, durch einen Verbindungskörper (20) an einer Nabe (4) eines Rades (5) eines Zweiradfahrzeuges (2) angebracht zu werden,
- eine Vielzahl von ineinandergreifenden lamellenförmigen Elementen (6), die von den kreisförmigen Stützmitteln (3A, 3B) gestützt werden, und radial um eine Drehachse (A) der kreisförmigen Stützmittel (3A, 3B) herum angeordnet sind, wobei die ineinandergreifenden, lamellenförmigen Elemente (6) angeordnet sind, um in ein Antriebselement (T) in der Art einer Kette oder eines Riemens des Fahrzeugs (2) einzugreifen,
- wobei jedes lamellenförmige Element (6) mit einer geformten eingreifenden Kante (S) bereitgestellt ist, die eine Aufeinanderfolge von Zonen (Z1, Z2,.., Zn) umfasst, die in unterschiedlichen Abständen von der Drehachse (A) positioniert sind,
- wobei die ineinandergreifenden lamellenförmigen Elemente (6) in eine erste Reihe (W1) von ineinandergreifenden lamellenförmigen Elementen (6) und eine zweite Reihe (W2) von ineinandergreifenden lamellenförmigen Elementen (6) unterteilt sind, die entgegengesetzt zueinander und zu- und voneinander weg beweglich sind, um einen Eingriffsradius (R) mit dem Antriebselement (T), und somit ein entsprechendes kinematisches Antriebsverhältnis zu ändern,
- ein Abstandsanpassungsglied (10), das betätigbar ist, um die erste Reihe (W1) und die zweite Reihe (W2) von ineinandergreifenden lamellenförmigen Elementen (6) zueinander und voneinander weg zu bewegen,
**DADURCH GEKENNZEICHNET, DASS** das Abstandsanpassungsglied (10) zwei Hebelelemente (11A, 11B) umfasst, die aneinander angelenkt sind und plättchenförmige Enden (12) aufweisen, um gleitend in jeweilige Kerbmittel (13) einzugreifen, die sich umfänglich auf den kreisförmigen Stützmitteln (3A, 3B) erstrecken, wobei die Hebelelemente (11A, 11B) durch ein Kabelelement (14) betätigbar sind.

2. Gangwechselvorrichtung nach Anspruch 1, wobei das kreisförmige Stützmittel ein Paar von einem getrennten, parallelen und koaxialen scheibenförmigen Stützelement (3A, 3B) umfasst, das entlang der Drehachse (A) auf dem Verbindungskörper (20) verschiebbar ist, um von- und zueinander bewegt zu werden, um das kinematische Antriebsverhältnis zu variieren.

3. Gangwechselvorrichtung nach Anspruch 2, wobei die ineinandergreifenden lamellenförmigen Elemente (6) der ersten Reihe (W1) durch ein erstes scheibenförmiges Stützelement (3A) des Paares gestützt werden, und die ineinandergreifenden lamellenförmigen Elemente (6) der zweiten Reihe (W2) durch ein zweites scheibenförmiges Stützelement (3B) des Paares gestützt werden.

4. Gangwechselvorrichtung nach Anspruch 3, wobei die lamellenförmigen Elemente (6) der ersten Reihe (W1) aus einer Innenfläche (7) des ersten scheibenförmigen Stützelements (3A) hervorstehen, und die lamellenförmigen Elemente (6) der zweiten Reihe (W1) aus einer weiteren Innenfläche (8) des zweiten scheibenförmigen Stützelements (3B) hervorstehen, wobei die weitere Innenfläche (8) der Innenfläche (7) des ersten scheibenförmigen Stützelements (3A) zugewandt ist.

5. Gangwechselvorrichtung nach einem der vorstehenden Ansprüche, wobei jedes lamellenförmige Element (6) der ersten Reihe (W1) Seite an Seite an einem entsprechenden lamellenförmigen Element (6) der zweiten Reihe (W2) angeordnet ist, und darauf relativ verschiebbar ist, sodass die jeweiligen entgegengesetzt geformten Eingriffskanten (S) jedes Mal gemeinsam einen jeweiligen verzahnten Eingriffssitz (9) für das Antriebselement (T) definieren.

6. Gangwechselvorrichtung nach einem der vorstehenden Ansprüche, wobei die erste Reihe (W1) und die zweite Reihe (W2) von lamellenförmigen Elementen (6) parallel zur Drehachse (A) verschiebbar sind und in entgegengesetzte Richtungen zueinander (D1, D2) beweglich sind, um sich zueinander oder voneinander weg zu bewegen.

7. Gangwechselvorrichtung nach einem der vorstehenden Ansprüche, wobei jede geformte Eingriffskante (S) ein Stufenprofil aufweist, das sich aus den jeweiligen kreisförmigen Stützmitteln (3A, 3B) auf eine abfallende Art zu der Drehachse (A) erstreckt, wobei die geformten Eingriffskanten (S) konfiguriert sind, um eine Vielzahl von diskreten Antriebsverhältnissen zu definieren.

8. Gangwechselvorrichtung nach einem der vorstehenden Ansprüche, wobei die Zonen (Z1, Z2,.. Zn) nacheinander in einem Abstand von der Drehachse (A) positioniert sind, der nach und nach von einem maximalen Abstandswert, nahe den kreisförmigen Stützmitteln (3A, 3B), auf einen minimalen Abstandswert in dem Bereich, der am weitesten von den kreisförmigen Stützmitteln (3A, 3B) entfernt ist, abnimmt.

9. Gangwechselvorrichtung nach Anspruch 7 oder 8, wenn von Anspruch 7 abhängig, wobei das Stufenprofil einer jeden geformten Eingriffskante (S) horizontale Abschnitte (H) parallel zur Drehachse (A) umfasst, die angeordnet sind, um das Antriebselement (T) rastend aufzunehmen, und schräge Abschnitte zum Definieren zusammenlaufender Oberflächen zur Aufnahme des Antriebselements (T), wobei die schrägen Abschnitte (I) zweier entgegengesetzter lamellenförmiger Elemente (6) geformt sind, um eine radiale Bewegung des Antriebselements (T) zu führen und zu erleichtern, wobei die schrägen Abschnitte (I) miteinander zusammenwirken, sodass sie bei einer gegenseitigen Annäherungsbewegung dem Antriebselement (T) nach und nach eine Zentrifugalbewegung, die sich von der Drehachse (A) wegbewegt, auferlegen.

10. Gangwechselvorrichtung nach Anspruch 1, wobei das Abstandsanpassungsglied (10) eine motorgetriebene Einheit der elektrischen/elektronischen Art umfasst, die sich zum automatischen Variieren - durch voreingestellte Beträge - des Abstandes zwischen den scheibenförmigen Elementen (3A, 3B) eignet, um die gewünschten Antriebsverhältnisse zu erzielen, wobei die motorgetriebene Einheit durch einen geeigneten Hebel betätigbar ist, der an einer Lenkstange zu positionieren ist, und zum Senden geeigneter elektrischer/elektronischer Steuerungssignale konfiguriert ist.

11. Gangwechselvorrichtung nach Anspruch 10, wobei die Kommunikation zwischen der motorgetriebenen Einheit und dem Steuerhebel durch ein elektrisches Verbindungskabel oder durch eine drahtlose Verbindung erzielt wird.

12. Gangwechselvorrichtung nach einem der vorstehenden Ansprüche, die weiter eine Spanneinheit (15) umfasst, die mit Rädern (16, 17) bereitgestellt ist, um das Antriebselement (T) gespannt zu halten, wenn sich der Wickelradius der ersten (W1) und zweiten (W2) Reihe lamellenförmiger Elemente (6) ändert.

## Revendications

1. Dispositif de changement de vitesse pour un véhicule à deux roues (2), comprenant :
- des moyens de support circulaires (3A, 3B) adaptés pour être montés, au moyen d'un corps de liaison (20), sur un moyeu (4) d'une roue (5) dudit véhicule à deux roues (2),
- une pluralité d'éléments d'engrènement lamellaires (6) supportés par lesdits moyens de support circulaires (3A, 3B) et agencés radialement autour d'un axe de rotation (A) desdits moyens de support circulaires (3A, 3B), lesdits éléments d'engrènement lamellaires (6) étant agencés pour venir en prise avec un élément de transmission (T) de type chaîne ou courroie dudit véhicule (2),
- chaque élément lamellaire (6) étant doté d'un bord d'engrènement formé (S) qui comprend une séquence de zones (Z1, Z2,.., Zn) positionnées à différentes distances dudit axe de rotation (A),
- lesdits éléments d'engrènement lamellaires (6) étant regroupés en une première série (W1) d'éléments d'engrènement lamellaires (6) et une seconde série (W2) d'éléments d'engrènement lamellaires (6) qui sont mutuellement opposées et mobiles l'une par rapport à l'autre pour changer un rayon d'engrènement (R) avec ledit élément de transmission (T) et ainsi un rapport de transmission cinématique correspondant,
- un élément d'ajustement de distance (10) pouvant être actionné pour déplacer la première série (W1) et la seconde série (W2) d'éléments d'engrènement lamellaires (6) pour les rapprocher et les écarter l'une de l'autre,
**CARACTÉRISÉ EN CE QUE** ledit élément d'ajustement de distance (10) comprend deux éléments formant levier (11A, 11B) mutuellement articulés et présentant des extrémités formées à tampon (12) pour venir en prise par coulissement avec des moyens formant rainures (13) respectifs qui s'étendent sur la circonférence desdits moyens de support circulaires (3A, 3B), lesdits éléments formant levier (11A, 11B) pouvant être actionnés par un élément formant câble (14).

2. Dispositif de changement de vitesse selon la revendication 1, dans lequel ledit moyen de support circulaire comprend une paire d'éléments de support (3A, 3B) en forme de disque, distincts, parallèles et coaxiaux pouvant translater le long dudit axe de rotation (A), sur ledit corps de liaison (20), pour se rapprocher et s'écarter l'un de l'autre pour faire varier le rapport de transmission cinématique.

3. Dispositif de changement de vitesse selon la revendication 2, dans lequel les éléments d'engrènement lamellaires (6) de la première série (W1) sont supportés par un premier élément de support en forme de disque (3A) de ladite paire, et les éléments d'engrènement lamellaires (6) de la seconde série (W2) sont supportés par un second élément de support en forme de disque (3B) de ladite paire.

4. Dispositif de changement de vitesse selon la revendication 3, dans lequel les éléments lamellaires (6) de la première série (W1) font saillie d'une face intérieure (7) du premier élément de support en forme de disque (3A), et les éléments lamellaires (6) de la seconde série (W1) font saillie d'une autre face intérieure (8) du second élément de support en forme de disque (3B), dans lequel ladite autre face intérieure (8) fait face à ladite face intérieure (7) du premier élément de support en forme de disque (3A).

5. Dispositif de changement de vitesse selon l'une quelconque des revendications précédentes, dans lequel chaque élément lamellaire (6) de la première série (W1) est agencé côte à côte avec, et peut coulisser relativement sur, un élément lamellaire (6) correspondant de la seconde série (W2) de sorte que les bords d'engrènement formés (S) opposés respectifs définissent ensemble, chaque fois, un siège d'engrènement denté (9) respectif pour ledit élément de transmission (T).

6. Dispositif de changement de vitesse selon l'une quelconque des revendications précédentes, dans lequel ladite première série (W1) et ladite seconde série (W2) d'éléments lamellaires (6) peuvent coulisser parallèlement audit axe de rotation (A) et sont mobiles dans des directions mutuellement opposées (D1, D2) pour se rapprocher ou s'écarter l'une de l'autre.

7. Dispositif de changement de vitesse selon l'une quelconque des revendications précédentes, dans lequel chaque bord d'engrènement formé (S) présente un profil étagé qui s'étend depuis les moyens de support circulaires (3A, 3B) respectifs en descendant vers ledit axe de rotation (A), les bords d'engrènement formés (S) étant configurés pour définir une pluralité de rapports de transmission discrets.

8. Dispositif de changement de vitesse selon l'une quelconque des revendications précédentes, dans lequel lesdites zones (Z1, Z2, ... Zn) sont positionnées l'une après l'autre à une distance dudit axe de rotation (A) qui diminue progressivement d'une valeur de distance maximum, près des moyens de support circulaires (3A, 3B), à une valeur de distance minimum dans la région la plus éloignée desdits moyens de support circulaires (3A, 3B).

9. Dispositif de changement de vitesse selon la revendication 7 ou 8 lorsqu'elle dépend de la revendication 7, dans lequel le profil étagé de chaque bord d'engrènement formé (S) comprend des portions horizontales (H) parallèles audit axe de rotation (A), agencées pour recevoir en appui ledit élément de transmission (T), et des portions inclinées pour définir des surfaces convergentes pour la réception dudit élément de transmission (T), les portions inclinées (I) de deux éléments lamellaires opposés (6) étant formées pour guider et faciliter un mouvement radial dudit élément de transmission (T), lesdites portions inclinées (I) coopérant ensemble de sorte que, dans un mouvement d'approche réciproque, elles impriment progressivement sur ledit élément de transmission (T) un mouvement centrifuge s'écartant dudit axe de rotation (A).

10. Dispositif de changement de vitesse selon la revendication 1, dans lequel ledit élément d'ajustement de distance (10) comprend une unité entraînée par moteur de type électrique/électronique adaptée pour faire varier automatiquement, de quantités prédéfinies, la distance entre lesdits éléments de support en forme de disque (3A, 3B) pour atteindre les rapports de transmission souhaités, ladite unité entraînée par moteur pouvant être actionnée par un levier adapté pour être positionnée sur un guidon et configurée pour envoyer des signaux de commande électriques/électroniques adaptés.

11. Dispositif de changement de vitesse selon la revendication 10, dans lequel la communication entre ladite unité entraînée par moteur et ledit levier de commande est obtenue par un câble de liaison électrique ou par une liaison sans fil.

12. Dispositif de changement de vitesse selon l'une quelconque des revendications précédentes, comprenant en outre une unité de mise sous tension (15) dotée de roues (16, 17) pour maintenir ledit élément de transmission (T) sous tension lorsque le rayon d'enroulement sur lesdites première (W1) et seconde (W2) séries d'éléments lamellaires (6) change.
